# EUROPÄISCHE PATENTSCHRIFT

(11) **EP 2 288 843 B1**
(45) Veröffentlichungstag und Bekanntmachung des Hinweises auf die Patenterteilung: **17.09.2014**
(21) Anmeldenummer: 09765926.2
(22) Anmeldetag: 19.06.2009
(51) Int. Cl.: F21S 8/00

(54) **LESE- ODER SPOTLEUCHTE**
READING LIGHT OR SPOTLIGHT
LAMPE DE LECTURE OU SPOT

(30) Priorität: 21.06.2008 DE 102008029511
(43) Veröffentlichungstag der Anmeldung: 02.03.2011
(73) Patentinhaber: Airbus Operations GmbH, 21129 Hamburg (DE)
(72) Erfinder: HEYM, Detlef, 28832 Achim (DE); BUDINGER, Tilo, 21077 Hamburg (DE); GINDELE, Frank, 85301 Schweitenkirchen (DE)
(74) Vertreter: Maiwald Patentanwalts GmbH
(86) Internationale Anmeldenummer: PCT/EP2009/057691
(87) Internationale Veröffentlichungsnummer: WO 2009/153347

(56) Entgegenhaltungen:
- EP-A1- 1 903 274
- WO-A1-2006/105646
- WO-A2-01/36864
- DE-A1- 10 307 147
- US-A1- 2005 002 191
- US-A1- 2005 127 381
- US-A1- 2008 310 155

## Beschreibung

### GEBIET DER ERFINDUNG

Die Erfindung betrifft eine Lese- oder Spotleuchte zum Einsatz in Kraftfahrzeugen, Immobilien oder auf Schiffen, insbesondere in Passagierkabinen und/oder Cockpits von Luftfahrzeugen, mit einer LED - Lichtquelle, deren Farbtemperatur mit dem Farbton "warm - weiß" bis "kalt - weiß" einstellbar ist, mit einer vorzugsweise als Sammellinse ausgebildeten Primäroptik und mit einer Sekundäroptik zur Fokussierung des von der Lichtquelle ausgesandten Lichts auf eine zu beleuchtende Fläche (Leseebene).

### TECHNOLOGISCHER HINTERGRUND

Bei den bisher bekannten Lese- und Spotleuchten sind als Lichtquellen eine oder mehrere einzelne Licht emittierende Dioden (LEDs) vorgesehen. Diese LEDs sind entweder einfarbig weiß und in verschiedenen Weißtönen nicht verstellbar oder sie bestehen aus mehreren einzelnen LEDs in verschiedenen Farben, wobei die Farben einzelner LEDs gemischt werden, ins-besondere zur Erzeugung von weißem Licht. Vereinzelt werden auch schon Multichip - LEDs für RGB - Spotleuchten (Rot-Grün-Blau - Leuchten) eingesetzt.

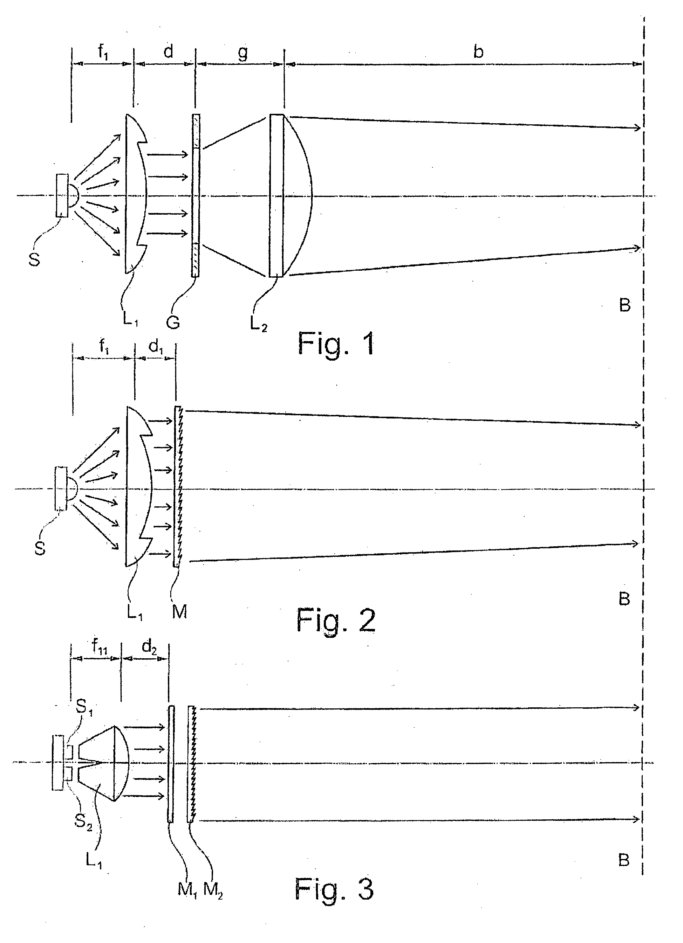

Wie aus Fig. 1 zu ersehen ist, wird bei den bekannten Lese- und Spotleuchten für die Fokussierung des von einer Lichtquelle, z. B. einer LED S, erzeugten Lichts auf eine zu beleuchtende Fläche, beispielsweise auf eine Leseebene B, ein optisches System aus einer Sammellinse mit der Brennweite f1 als Primäroptik L1, einer Blende G und einer Sammellinse mit einer Brennweite f2 als Sekundäroptik L2 eingesetzt. Die Blende G ist zwischen den Optiken L1 und L2 in einem variablen Abstand d zu der Primäroptik L1 angeordnet, wobei der Ab-stand d der Brennweite f1 entsprechen kann. Die Gegenstandsweite zwischen der Blende G und der Sekundäroptik L2 ist mit g bezeichnet, während sich zwischen der Sekundäroptik L2 und der zu beleuchtenden Fläche / Leseebene B die Bildweite b befindet. Da die Bildweite b gegenüber der Gegenstandsweite g in der Regel sehr groß (gegen unendlich) ist, entspricht die Gegenstandsweite g in etwa der Brennweite f2 der Sekundäroptik L2. Im eingangsseitigen Brennpunkt f1 der Primäroptik L1 ist die LED S angeordnet, so dass ein paralleles Lichtbündel aus der Primäroptik L1 austritt, durch die Blende G durchtritt und über die Sekundäroptik L2 vorzugsweise gebündelt auf die zu beleuchtende Fläche / Leseebene B gelenkt wird. Oftmals wird zur besseren Ausleuchtung der Blende G auch ein zweistufiges Linsensystem eingesetzt, wobei die erste Linse hauptsächlich die Aufgabe hat, das Licht aus der Lichtquelle einzusammeln und die zweite Linse dieses Licht gezielt auf die Blende G richtet. Ein solches optisches System und auch das in Fig. 1 dargestellte System benötigt in Strahlungsrichtung immer mindestens die Länge von zwei Brennweiten (zweifache Brennweitenlänge), und zwar jeweils etwa die einfache Brennweite f1 der Primäroptik L1 und die einfache Brennweite f2 der Sekundäroptik L2 sowie zusätzlich den Abstand d zwischen Primäroptik L1 und Blende G. Hierdurch kann in nachteiliger Weise eine Mindestgröße des Bauvolumens der Leuchte, speziell der Bautiefe nicht unterschritten werden.

In der DE 103 07 147 A1 ist eine Leseleuchte für Flugzeugkabinen beschrieben, die insbesondere über einem Passagiersitz installiert werden kann. Als Lichtquelle ist vorzugsweise eine Kleinhalogen- oder eine LED-Leuchte vorgesehen. Die Leseleuchte ist kompakt mit einem geringen Einbauvolumen ausgebildet und ermöglicht eine Justierung der Leuchte in einem relativ weiten Bereich. Es handelt sich um eine projizierende Leseleuchte mit horizontal liegender optischer Achse, wobei die ausgesandten Lichtstrahlen über ein optisches Umlenkmittel in den Sitzbereich des zugeordneten Passagiersitzes umgelenkt werden. Auch diese Leseleuchte weist ein optisches Linsensystem auf, welches aus einer Fokussierlinse, einer Blende und einer Sammellinse besteht, so dass auch hier eine durch diese Bauelemente festgelegte Mindestgröße des Bauvolumens der Leuchte nicht unterschritten werden kann. Eine Verkleinerung der Bautiefe wurde dadurch erreicht, dass der optische Strahlengang aus der vertikalen in die horizontale Achse verlagert wurde.

Aus der DE 10 2006 047 941 A1 ist eine Vorrichtung zur Homogenisierung von Strahlung, insbesondere von Licht mit nicht regelmäßigen Mikrolinsenarrays bekannt, wobei zumindest eine Linsenanordnung eine Vielzahl von mit parallelen optischen Achsen angeordnete Linsensysteme aufweist. Die Linsensysteme sind zumindest teilweise nicht identisch, wobei nicht identisch bedeutet, dass die Parameter der Linsen des Arrays, wie z. B. der Krümmungsradius, der freie Durchmesser, die Vertexposition oder andere, von Linse zu Linse variieren können. Allerdings haben die nicht identischen Linsensysteme jeweils die gleiche numerische Apertur in einer ersten Richtung parallel zur Hauptebene der Linsensysteme.

In der DE 10 2004 004 778 A1 ist ein Leuchtdioden - Beleuchtungsmodul mit einem oder mehreren Leuchtdiodenbauelementen und einer optischen Einrichtung zur Strahlformung, die dem (den) Leuchtdiodenbauelement(en) nachgeordnet ist (sind), beschrieben. Die optische Einrichtung weist für jedes Leuchtdiodenbauelement ein strahlungsbündelndes optisches Element auf, dem gesehen vom Leuchtdiodenbauelement ein strahlungsaufweitendes opti-sches Element nachgeordnet ist. Es kann jeweils ein rotes Licht, grünes Licht und blaues Licht emittierendes Leuchtdiodenbauelement vorgesehen sein, wobei das strahlungsaufweitende optische Element das Licht der drei Leuchtdiodenbauelemente durchmischt.

Aus der DE 10 2005 028 671 A1 ist ein Verfahren zur Steuerung der Farbanteile einer Beleuchtungseinrichtung für Mikrodisplay - Projektionssysteme mit mehreren Farblichtquellen, wie beispielsweise LEDs oder OLEDs, bekannt. Die Lichtquellen werden unabhängig voneinander angesteuert. Zur Erzeugung des Farbbildes sind Zeitscheiben vorgesehen, in denen Farbteilbilder, wie beispielsweise für Rot, Grün oder Blau, farbsequentiell erzeugt werden. Zur Ermittlung eines in der Nähe des Zielweißlichtpunktes liegenden Weißpunktes im CIE - Farbdreieck werden die Initialwerte für die Zielscheibenanteile der Farblichtquellen empirisch ermittelt. Es wird eine Kombination von sequentieller additiver Farbmischung und der Farbmischung nach dem Superpositionsprinzip durchgeführt, die zu einer relativen Anpassung der Beleuchtungsanordnung an den systemabhängigen Farbraum beziehungsweise an die spektralen Transmissionseigenschaften des Projektionssystems führt. Zur Steuerung der Farbanteile zeigt die Figur 1 dieser Druckschrift ein CIE - Farbdreieck mit der Darstellung der Lichtquellenfarborte und der Zielfarborte. In dem CIE - Farbdreieck ist ein durch die Lichtquellenfarborte für die Grundfarben Grün, Rot und Blau aufgespanntes Farbdreieck integriert, in dem ein weiteres durch die Zielfarborte der Grundfarben gebildetes Farbdreieck eingezeichnet ist. Nach der Ermittlung der Lage (Koordinaten) der Lichtquellenfarborte und der Leistungsanteile der Farblichtquellen in jeder Zeitscheibe werden die Lichtquellenfarborte in die erwünschten Zielfarborte transformiert, wobei sich ein weiterer, in der Nähe des Zielweißpunktes liegender Weißpunkt ausbildet. Nachteiligerweise ist mit dieser Projektionsanordnung nur ein verhältnismäßig kleiner CRI - Farbwiedergabeindex erreichbar, wobei die Farbmischung durch zeitliches Ansteuern der einzelnen Grundfarben Grün, Rot und Blau erfolgt.

Aus der DE 10 2005 061 204 A1 ist eine Beleuchtungsvorrichtung ersichtlich, die auf einem gemeinsamen Substrat zumindest eine LED einer ersten Farbe, vorzugsweise Blau, zumindest eine LED mit einer zweiten Farbe, vorzugsweise Rot, und bevorzugt eine LED einer dritten Farbe, vorzugsweise Grün, sowie zumindest eine weiße LED umfasst. Ein Beleuchtungssteuergerät für die Beleuchtungsvorrichtung umfasst u. a. unterschiedliche steuerbare Energiequellen für LEDs von unterschiedlicher Farbe zur Erzeugung unabhängig gesteuerter Betriebssignale für die LEDs von unterschiedlicher Farbe. Die weiße LED kann durch eine blaue oder UV - LED und eine ihr zugeordnete Lichtumwandlungseinrichtung ausgebildet sein. Auch kann die Beleuchtungsvorrichtung zwei oder mehrere LEDs von derselben Farbe, einschließlich weiß, umfassen. Die LEDs können auf der Basis von Faktoren wie Wellenlänge und Intensität ausgewählt werden, wobei unter Verwendung dieser Verteilung zusammen mit zwei grünen LEDs eine solche Vorrichtung mehr als 85% des sichtbaren Farbraumes abdecken kann. Die Fig. 10 dieser Druckschrift zeigt in einer graphischen Darstellung die Farbkoordinaten im Farbraum der oben beschriebenen Beleuchtungsvorrichtung, wobei eine äußere elliptische Form alle sichtbaren Wellenlängen repräsentiert, während eine innere drei-eckige Form die erzeugbaren Farben repräsentiert. Eine gekrümmte Linie in der Mitte der dreieckigen Form wird als weiße Linie bezeichnet, da diese Linie alle Kombinationen der LEDs auf all den verschiedenen Farbtemperaturen darstellt, die bei einer Kombination weißes Licht erzeugen. Auch bei dieser Beleuchtungsvorrichtung wird ein hoher CRI-Farbwiedergabeindex nicht erreicht.

### ZUSAMMENFASSUNG DER ERFINDUNG

Der Erfindung liegt nun die Aufgabe zugrunde, eine Lese- oder Spotleuchte der eingangs genannten Art zu schaffen, die sich in einem Bereich der Farbtemperatur von 3000 bis 6000 Kelvin, d.h. in den Weißtönen "warm - weiß" bis "kalt - weiß", verändern und einstellen lässt, im gesamten Einstellbereich eine gute Farberkennung verschiedener Farben gewähr-leistet und deren Baulänge in Strahlungsrichtung erheblich verkleinert ist.

Die Aufgabe der vorliegenden Erfindung wird gelöst durch den Gegenstand des unabhängigen Anspruchs 1, wobei vorteilhafte Ausgestaltungen der Erfindung durch die abhängigen Ansprüche 2 bis 4 angegeben werden.

Gemäß der Erfindung ist eine Lese- oder Spotleuchte zum Einsatz in Kraftfahrzeugen, Immobilen oder auf Schiffen angegeben, beispielsweise für den Einsatz in Passagierkabinen und / oder Cockpits von Luftfahrzeugen. Die Lese- oder Sportleuchte weist auf: eine LED - Lichtquelle, deren Farbtemperatur mit dem Farbton "warm - weiß" bis "kalt - weiß" einstellbar ist; eine beispielsweise als Sammellinse ausgebildeten Primäroptik; und eine Sekundäroptik zur Fokussierung des von der Lichtquelle ausgesandten Lichts auf eine zu beleuchtende Fläche (Leseebene); wobei als LED - Lichtquelle mindestens vier Hochleistungs-LEDs (S, S1, S2) von gleicher oder unterschiedlichen, den Farbton des ausgesandten Lichts bestimmenden Farbtemperatur(en) auf oder entlang der Plankschen Kurve im CIE - Diagramm (1) bzw. von gleicher oder unterschiedlicher Wellenlängen zur Erzielung einer hohen Farbwiedergabe mit einem CRI - Farbwiedergabeindex zwischen 80 und 100 vorgesehen sind; wobei die Lichtquellenfarborte der verwendeten Hochleistungs-LEDs innerhalb des CIE - Diagramms (1) die Eckpunkte (E1 bis E4) eines Farbvierecks (3) bzw. Farbvielecks bilden, welches die Plancksche Kurve (2) einschließt, und wobei der Primäroptik (L1, L11) in einem vorgegebenen Abstand (d1, d2) als Sekundäroptik mindestens eine Mikro-Optik (M) zur Durchmischung der von den Hochleistungs-LEDs (S, S1, S2) abgegebenen Lichtspektren, um Temperaturstrahlern nahe kommendes weißes Licht erzeugen, und zur Ablenkung des durchmischten Lichtes auf die zu beleuchtende Fläche (Leseebene B) nachgeordnet ist.

Um eine Lese- oder Spotleuchte zu schaffen, die sich in einem Bereich der Farbtemperatur von 3000 bis 6000 Kelvin verändern und einstellen lässt, im gesamten Einstellbereich eine gute Farberkennung verschiedener Farben gewährleistet und deren Baulänge in Strahlungsrichtung erheblich verkleinert ist, sind als LED-Lichtquelle mindestens vier Hochleistungs-LEDs von gleicher oder unterschiedlichen, den Farbton des ausgesandten Lichts bestimmenden Farbtemperatur(en) auf oder entlang der Plankschen Kurve im CIE - Diagramm bzw. von gleicher oder unterschiedlicher Wellenlänge zur Erzielung einer hohen Farbwiedergabe mit einem CRI - Farbwiedergabeindex zwischen 80 und 100 vorgesehen. Die Lichtquellenfarborte der verwendeten Hochleistungs-LEDs innerhalb des CIE - Diagramms bilden die Eckpunkte eines Farbvierecks bzw. Farbvielecks, welches die Plancksche Kurve einschließt. Der Primäroptik ist in einem vorgegebenen Abstand als Sekundäroptik mindestens eine Mikro-Optik zur Durchmischung der von den Hochleistungs-LEDs abgegebenen Lichtspektren, um Temperaturstrahlern nahe kommendes weißes Licht zu erzeugen, und zur Ablenkung des durchmischten Lichtes auf die zu beleuchtende Fläche (Leseebene) nachgeordnet. Die Mikro-Optik kann aus mindestens zwei Einzelmikro-Optiken bestehen, wobei eine der Einzelmikro-Optiken zur Durchmischung der von den Hochleistungs-LEDs abgegebenen Lichtspektren dient, und die andere Einzelmikro-Optik das durchmischte Licht auf die zu beleuchtende Fläche (Leseebene) ablenkt. Gemäß einer beispielhaften Ausführungsform der Erfindung besteht die Mikro-Optik aus mindestens zwei Einzelmikro-Optiken, wobei eine der Einzelmikro-Optiken zur Durchmischung der von den Hochleistungs-LEDs abgegebenen Lichtspektren dient, und wobei die andere Einzelmikrö-Optik das durchmischte Licht auf die zu beleuchtende Fläche (Leseebene) ablenkt. Man kann auch eine Kombination aus Mikrooptik und Linse verwenden.

Gemäß einer beispielhaften Ausführungsform der Erfindung ist es durch eine gezielte Entwicklung der Mikro-Optik (speziell entwickelte Optik) speziell zur scharfen Begrenzung des Leuchtfeldes ferner möglich ist, die Form des auszuleuchtenden Feldes zu beeinflussen und somit z.B. ovale oder rechteckige Felder zu ermöglichen.

Ein wesentlicher Vorteil der Erfindung besteht darin, dass bei gleichzeitiger Erhöhung der Effizienz, d. h. des optischen Wirkungsgrades der Lese- oder Spotleuchte, die Homogenität der Farbmischung des Lichtes auf der zu beleuchtenden Fläche / Leseebene durch die Verwendung von Mikro-Optiken verbessert wird. Gleichzeitig wird durch die Mikro-Optik eine homogene Ausleuchtung, d. h. eine gleichmäßige Beleuchtungsstärke in der Leseebene erreicht. Die Mikro-Optik ermöglicht bei unterschiedlichen Abstrahlhöhen ein gleichmäßig aus-geleuchtetes Feld mit einer nahezu konstanten Beleuchtungsstärke im gesamten Feld bzw. in unterschiedlichen Formen des ausgeleuchteten Feldes. Es wird in vorteilhafter Weise für jede Farbwiedergabe ein CRI - Farbwiedergabeindex von größer als 80 erreicht. Die geringe Baulänge der Lese- oder Spotleuchte wird hauptsächlich durch die Brennweite der Primäroptik und den Abstand zwischen der Primäroptik und der Mikrooptik bestimmt. Somit liegt ein weiterer erfindungsgemäßer Vorteil in der Miniaturisierung des optischen Systems, wodurch sich das Gewicht der Lese- oder Spotleuchte verringern kann und wodurch sich neue Einbauorte für die Lese- oder Spotleuchte erschließen, beispielsweise im Dachhimmel eines Flugzeuges mit begrenzter Einbautiefe.

### KURZE BESCHREIBUNG DER FIGUREN

In der Zeichnung ist ein Ausführungsbeispiel nach der Erfindung dargestellt, und zwar zeigt:
- Fig. 1: ein optisches System für eine Lese- oder Spotleuchte gemäß dem Stand der Technik,
- Fig. 2: eine Lese- oder Spotleuchte mit einer LED als Lichtquelle und einer Mikro-Optik als Sekundäroptik,
- Fig. 3: eine Lese- oder Spotleuchte mit einer aus zwei LEDs bestehenden Lichtquelle und einer Mikro-Optik, die aus zwei parallel zueinander angeordneten Einzelmikro-Optiken besteht, und
- Fig. 4: eine graphische Darstellung der CIE - Normfarbtafel mit eingezeichneten Planckschem Kurvenzug und Farbviereck, dessen Endpunkte durch die Lichtquellenfarborte der verwendeten LEDs bestimmt sind.

### DETAILLIERTE BESCHREIBUNG VON AUSFÜHRUNGSBEISPIELEN

Die Darstellungen in den Figuren sind schematisch und nicht maßstäblich.

In **Fig. 2** weist die nicht näher bezeichnete Lese- oder Spotleuchte eine Hochleistungs-LED S auf, die im eingangsseitigen Brennpunkt einer Primäroptik L1 mit der Brennweite f1 angeordnet ist. An Stelle einer LED S können auch zwei oder mehrere Hochleistungs-LEDs, insbesondere vier Hochleistungs-LEDs, vorgesehen sein, die gleiche oder unterschiedliche, den Farbton des ausgesandten Lichts bestimmende Farbtemperaturen bzw. Wellenlängen auf-weisen. Die von den Hochleistungs-LEDs ausgesandten Einzelfarben werden zur Erzeugung von weißem Licht oder von Licht, welches weißem Licht nahe kommt, überlagert. Hierbei ist die Farbtemperatur ein Maß für den Farbeindruck einer Lichtquelle; sie ist definiert als die Temperatur auf die man einen Schwarzen Körper (Planckschen Strahler/Temperaturstrahler) aufheizen müsste, damit er Licht einer Farbe abgibt, das

(bei gleicher Helligkeit und unter festgelegten Beobachtungsbedingungen) der zu beschreibenden Farbe am ähnlichsten ist. Das von der LED und der Primäroptik L1 erzeugte parallele Lichtbündel trifft auf eine Mikrooptik M, unter der eine miniaturisierte Linse bzw. Linsenanordnung verstanden wird und die in einem vorgegebenen Abstand d1 der Primäroptik L1 nachgeordnet ist. Der Abstand d1 kann sehr klein oder gleich Null sein. Die Mikro-Optik M lenkt das Lichtbündel auf eine zu beleuchtende Fläche / Leseebene B, wobei bei der Verwendung von mehreren LEDs auch eine Durchmischung des von diesen LEDs ausgesandten Lichts durch die Mikro-Optik M erfolgen kann. Durch den Einsatz von verschiedenen Mikro-Optiken M können in vorteilhafter Weise unterschiedliche Abstrahlwinkel des aus der Mikro-Optik M austretenden durchmischten Lichts erzielt und somit unterschiedliche Einbauhöhen ermöglicht werden.

Die in **Fig. 3** dargestellte Lese- oder Spotleuchte unterscheidet sich von derjenigen aus Fig. 2 durch die Verwendung von zwei Hochleistungs-LEDs S1 und S2, die jeweils auch durch vier Einzel - LEDs mit unterschiedlichen Farbtemperaturen bzw. Wellenlängen gebildet werden können, sowie von einer zwei Einzelmikro-Optiken M1 und M2 aufweisenden Mikro-Optik. Die Hochleistungs-LEDs S1 und S2 haben gleiche oder unterschiedliche, den Farbton des ausgesandten Lichts bestimmende Farbtemperaturen bzw. Wellenlängen und sind im eingangsseitigen Brennpunkt einer Primäroptik L11 angeordnet, der in einem vorgegebenen Abstand d2 die Einzelmikro-Optiken M1 und M2 nachgeordnet sind. Auch bei dieser Lese- oder Spotleuchte ist der Abstand d2 durch die Qualität des aus der Primäroptik L11 austretenden parallelen Lichtbündels bestimmt. Eine der Einzelmikro-Optiken, beispielsweise die Optik M1, dient zur Durchmischung der von den Hochleistungs-LEDs S1 und S2 abgegebenen Lichtspektren, während die andere Einzelmikro-Optik, beispielsweise die Optik M2, das durchmischte Licht auf die zu beleuchtende Fläche (Leseebene) B ablenkt.

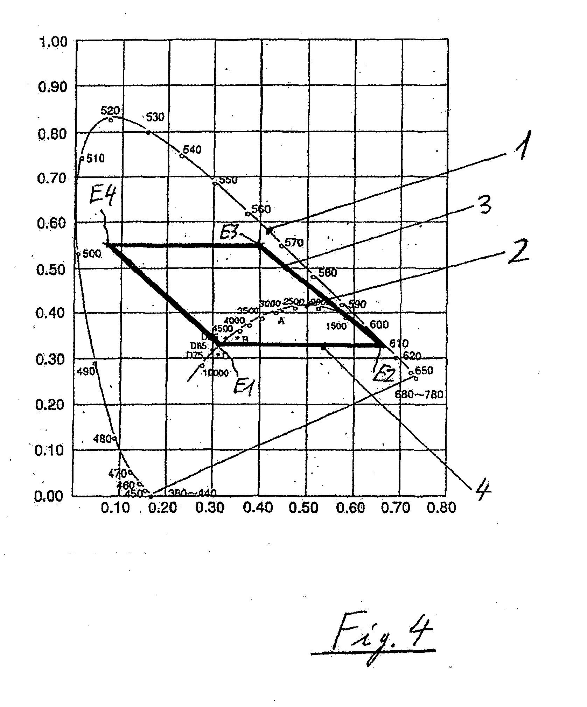

Das aus Fig. 4 ersichtliche zweidimensionale Diagramm 1 zeigt die von der Commission Internationale de l'éclairage (CIE) 1931 entwickelte Normfarbtafel, in der Anteile von Normfarbwerten auf der x- bzw. y-Achse aufgetragen sind, wobei jedem x- / y- Paar ein Farbort und damit eine bestimmte Farbart entspricht. Diese Normfarbtafel ist so aufgebaut, dass
- jeder Punkt des Diagramms eine Farbe repräsentiert,
- alle Farben auf der Strecke zwischen zwei Farbpunkten durch Mischen der Farben der Endpunkte hergestellt werden können , und dass
- alle Punkte innerhalb eines Dreiecks durch Mischen der Farben der Endpunkte zu er-reichen sind.

Entlang des zungenförmigen Randes liegen die Farben des monochromatischen Lichts, und in ihrem unteren Bereich, nahe der x-Achse, die nicht monochromatisch darstellbaren Purpurfarben. In der Mitte ist ein Bereich, indem die Farben für das menschliche Auge weiß er-scheinen. In dem CIE - Diagramm 1 werden nur die x / y - Werte gezeigt, auf die z - Werte wird verzichtet, da sie wegen der Beziehung z = 1 - x - y leicht berechnet werden können und daher ein zweidimensionales Diagramm ausreicht.

Wenn man innerhalb CIE - Diagramm 1 drei Punkte als Farben eines Dreiecks festlegt, so sind alle Farben innerhalb dieses Dreiecks durch Mischung der Eckfarben zu erhalten; durch die drei Eckpunkte wird eine Farbskala definiert. Alle Farben innerhalb dieses Farbdreiecks lassen sich durch Variation der Helligkeit der Einzelfarben erzeugen, wobei die Commission Internationale de l'éclairage (CIE) für die Farben Rot, Grün und Blau einen Standard eingeführt hat. Bei der Verwendung von drei LEDs lassen sich durch das aufgespannte Farbdreieck ebenfalls veränderbare Weißtöne auf oder entlang der Plankschen Kurve erzeugen. Nachteilig ist aber, dass der CRI - Farbwiedergabeindex bei dieser Möglichkeit eher gering ist. In der Normfarbtafel gemäß **Fig. 4** ist die Plancksche Kurve 2 innerhalb des CIE - Diagramm 1 eingezeichnet, mit welcher diejenige Kurve in der Normfarbtafel bezeichnet wird, welche die Farbtöne von Temperaturstrahlern verschiedener Farbtemperaturen miteinander verbindet. Ein wesentliches Merkmal der vorliegenden Erfindung liegt in der Erkenntnis, dass sich durch_Mischen von von den Hochleistungs-LEDs abgegebenen Einzelfarben Lichtfarben erzeugen lassen, die auf oder entlang der Planckschen Kurve 2 liegen und somit in ihrer Lichtfarbe den Temperaturstrahlern sehr ähnlich sind, wobei eine hohe Farbwiedergabe mit einem CRI - Farbwiedergabeindex zwischen 80 und 100 beibehalten wird. Unter dem CRI - Farbwiedergabeindex (CRI steht für Colour Rendering Index) versteht man eine photometrische Größe, mit der sich die Qualität der Farbwiedergabe von Lichtquellen gleicher korrelierter Farbtemperatur beschreiben lässt. Der Farbwiedergabeindex bringt zum Ausdruck, wie stark sich die Farbe eines Objektes bei der Beleuchtung mit zwei unterschiedlichen Lichtquellen ändert, wobei maximal ein Wert von 100 erreichbar ist und wobei zu seiner Berechnung verschiedene Testfarben mit einer bestimmten Remission normiert sind.

In Fig. 4 ist weiterhin ein Farbviereck 3 innerhalb des CIE - Diagramms 1 eingezeichnet, welches die Plancksche Kurve 2 einschließt. Die Eckpunkte E1 bis E4 des Farbvierecks 3 liegen innerhalb des CIE - Diagramms 1 und werden durch die Lichtquellenfarborte von vier verwendeten Hochleistungs-LEDs gebildet. Zwei dieser Eckpunkte E1 und E2, die unterhalb der Planckschen Kurve 2 liegen, sind durch die Lichtquellenfarborte "kalt - weiß" und "Rot" bestimmt und durch eine Gerade 4 miteinander verbunden. Bei dieser aus zwei Hoch-leistungs-LEDs bestehenden Anordnung sind die Farben auf der Geraden 4 einstellbar, es sind veränderliche "ähnlichste" Farbtemperaturen vorhanden und es wird ein hoher CRI - Farbwiedergabeindex erreicht. Allerdings wird mit dieser Anordnung keine LED - Lichtquelle geschaffen, deren Farbtemperatur mit dem Farbton "warm - weiß" bis "kalt - weiß" einstellbar ist. Um dieses zu erreichen, ist als ein weiteres wesentliches Merkmal der Erfindung vorgesehen, dass mindestens zwei weitere Hochleistungs-LEDs, deren Lichtquellenfarborte ober-halb der Planckschen Kurve 2 liegen, zu den beiden obigen, die Eckpunkte E1 und E2 bildenden Hochleistungs-LEDs hinzugefügt werden und somit als Eckpunkte E3 und E4 das aus Fig. 4 ersichtliche Farbviereck 3 ermöglichen. Hierbei können die zugehörigen Eckpunkte E3 und E4 der hinzugefügten Hochleistungs-LEDs beispielsweise durch die Lichtquellenfarborte "grün oder cyan" und "warm - weiß oder gelb" bestimmt sein. Durch Kombination der vier Farben warm - weiß, kalt - weiß, Rot und cyan sind CR1 - Farbwiedergabeindices über 90 im gesamten Bereich der Farbtemperatur von 3000 bis 6000 Kelvin erreichbar. Die Erfindung ist nicht auf die Verwendung von vier Hochleistungs-LEDs beschränkt. Bei der Verwendung von fünf, sechs oder weiteren Hochleistungs-LEDs ergibt sich anstelle des in Fig. 4 dargestellten Farbvierecks ein Farbfünfeck, Farbsechseck oder anderes Farbvieleck.

Bei eine nicht beanspruchten Anwendung von vier Hochleistungs-LEDs können beispielsweise zwei Hochleistungs-LEDs weißes Licht von gleicher oder unterschiedlicher Farbtemperatur aussenden, während eine dritte Hochleistungs-LED rotes Licht und die vierte Hochleistungs-LED grünes Licht von vorgegebenen Wellenlängen aussenden. So ist z.B. gewährleistet, dass man weißes Licht verschiedener Farbtemperaturen entlang der Plankschen Kurve im CIE-Diagramm 1 erreichen kann. Auch ist z. B. durch den Einsatz von mehreren Hochleistungs-LEDs (S1, S2), die weißes Licht von gleicher oder unterschiedlicher Farbtemperatur aussenden, und dem Hinzufügen einer roten Hochleistungs-LED mit vorgegebener Wellenlänge ein "warmer" Farbton des in der Regel recht "kalten" LED-Lichts möglich.

### Leuchten - Definitionen

Als Leseleuchte wird eine Leuchte bezeichnet, welche ein genau definiertes Feld in der Lichtfarbe Weiß ausleuchtet (Leseebene), wobei die Beleuchtungsstärke innerhalb dieses Feldes möglichst homogen sein soll.

Als **Spotleuchte** (auch **Punktstrahler** genannt) wird eine Leuchte bezeichnet, welche das von einer Lichtquelle ausgesandte Licht eng bündelt und in der Regel das Feld recht ungleich-mäßig ausleuchtet, wobei die Lichtfarbe auch farbig sein kann.

### Bezugszeichenliste:

- S: LED
- L1: Primäroptik
- f1: Brennweite der Primäroptik L1
- L2: Sekundäroptik
- G: Gegenstandsweite der Sekundäroptik L2
- b: Bildweite der Sekundäroptik L2
- G: Blende
- d: Abstand der Primäroptik L1 zur Blende G
- B: zu beleuchtende Fläche / Leseebene
- M: Mikro-Optik
- d1: Abstand der Primäroptik L1 zur Mikro-Optik M
- L11: Primäroptik
- f11: Brennweite der Primäroptik L11
- M1: Einzelmikro-Optik
- M2: Einzelmikro-Optik
- d2: Abstand der Primäroptik L11 zur den Mikro-Optiken M1 und M2
- 1: CIE - Diagramm
- 2: Plancksche Kurve im CIE -Diagramm 1
- 3: Farbviereck im CIE - Diagramm 1
- 4: Gerade des Farbvierecks 3
- E1 bis E4: Eckpunkte des Farbvierecks 3

## Patentansprüche

1. Lese- oder Spotleuchte zum Einsatz in Kraftfahrzeugen, Immobilen oder auf Schiffen, insbesondere in Passagierkabinen und / oder Cockpits von Luftfahrzeugen, die Lese- oder Sportleuchte aufweisend:
eine LED - Lichtquelle, deren Farbtemperatur zwischen den Farbtönen "warm - weiß" bis "kalt - weiß" einstellbar ist;
eine beispielsweise als Sammellinse ausgebildeten Primäroptik; und
eine Sekundäroptik zur Fokussierung des von der Lichtquelle ausgesandten Lichts auf eine zu beleuchtende Fläche (Leseebene);
wobei als LED - Lichtquelle mindestens vier Hochleistungs-LEDs (S, S1, S2) von gleicher oder unterschiedlichen, den Farbton des ausgesandten Lichts bestimmenden Farbtemperatur(en) auf oder entlang der Plankschen Kurve im CIE - Diagramm (1) bzw. von gleicher oder unterschiedlicher Wellenlängen zur Erzielung einer hohen Farbwiedergabe mit einem CRI - Farbwiedergabeindex zwischen 80 und 100 vorgesehen sind;
wobei die Lichtquellenfarborte der verwendeten Hochleistungs-LEDs innerhalb des CIE - Diagramms (1) die Eckpunkte (E1 bis E4) eines Farbvierecks (3) bzw. Farbvielecks bilden,
welches die Plancksche Kurve (2) einschließt;
wobei der Primäroptik (L1, L11) in einem vorgegebenen Abstand (d1, d2) als Sekundäroptik mindestens eine Mikro-Optik (M) zur Durchmischung der von den Hochleistungs-LEDs (S, S1, S2) abgegebenen Lichtspektren, um Temperaturstrahlern nahe kommendes weißes Licht zu erzeugen, und zur Ablenkung des durchmischten Lichtes auf die zu beleuchtende Fläche (Leseebene B) nachgeordnet ist;
wobei vier Hochleistungs-LEDs (S1, S2) vorgesehen sind, von denen jeweils eine Hochleistungs-LED warm - weißes Licht, eine andere Hochleistungs-LED kalt - weißes Licht, eine weitere Hochleistungs-LED rotes Licht und eine weitere Hochleistungs-LED cyan Licht von vorgegebener Farbtemperatur bzw. Wellenlänge aussendet.

2. Lese- oder Spotleuchte nach Anspruch 1,
wobei die Mikro-Optik (M) aus mindestens zwei Einzelmikro-Optiken (M1 bzw. M2) besteht, wobei eine der Einzelmikro-Optiken (M1 oder M2) zur Durchmischung der von den Hochleistungs-LEDs (S1, S2) abgegebenen Lichtspektren dient, und
wobei die andere Einzelmikro-Optik (M1 bzw. M2) das durchmischte Licht auf die zu beleuchtende Fläche (Leseebene B) ablenkt.

3. Lese- oder Spotleuchte nach Anspruch 1 oder 2,
wobei die Mikro-Optiken (M, M1, M2) speziell zur scharfen Begrenzung des Leuchtfeldes die Form des auszuleuchtenden Feldes beeinflussen und somit insbesondere ovale oder rechteckig ausgeleuchtete Felder ermöglichen.

4. Lese- oder Spotleuchte nach Anspruch 1,2 oder 3,
wobei verschiedene Mikro-Optiken (M, M1, M2) zur Erzielung von unterschiedlichen Abstrahlwinkeln des aus den Mikro-Optik (M, M1, M2) austretenden durchgemischten Lichts vorgesehen sind.

## Claims

1. A reading lamp or spotlight for use in motor vehicles, immovable properties or ships,
in particular in passenger cabins and/or cockpits of aircraft, the reading lamp or spotlight comprising:
an LED light source with a color temperature that can be adjusted between the colors "warm-white" to "cold-white";
a primary optics, for example designed as a converging lens; and
a secondary optics to focus the light emitted by the light source onto a surface (reading plane) to be illuminated;
wherein the LED light source comprises at least four high-power LED's (S, S1, S2) with identical or varied color temperature(s) determining the color of the emitted light on or along the Planck curve in the CIE diagram (1), or with identical or varied wavelengths to achieve a high color rendering with a CRI color rendering index of between 80 and 100;
wherein the light source color locations of the used high-power LED's within the CIE diagram (1) form the corner points (E1 to E4) of a color quadrangle (3) or color polygon, which includes the Planck curve (2),
wherein the primary optics (L1, L11) has arranged downstream from it at a predetermined distance (d1, d2) as the secondary optics at least one micro-optics (M) to mix the light spectra emitted from the high-power LED's (S, S1, S2), to generate white light that approximates thermal radiators, and to deflect the mixed light onto the surface (reading plane B) to be illuminated,
wherein four high-power LED's (S1, S2) are provided, wherein one high-power LED emits warm-white light, another high-power LED emits cold-white light, another high-power LED emits red light, and another high-power LED emits cyan light of a predetermined color temperature or wavelength.

2. The reading lamp or spotlight according to claim 1,
wherein the micro-optics (M) consists of at least two individual micro- optics (M1 and M2, respectively),
wherein one of the individual micro- optics (M1 or M2) is used to mix the light spectra emitted by the high-power LED's (S1, S2), and
wherein the other individual micro-optics (M1 or M2, respectively) deflect the mixed light onto the surface (reading plane B) to be illuminated.

3. The reading lamp or spotlight according to claim 1 or 2,
wherein the micro-optics (M, M1, M2) influence the shape of the zone to be illuminated in order to exactly confine the illuminated area, thereby enabling oval or rectangular illuminated zones.

4. The reading lamp or spotlight according to claim 1, 2 or 3,
wherein various micro-optics (M, M1, M2) are provided to achieve different emission angles of the mixed light exiting the micro- optics (M, M1, M2).

## Revendications

1. Lampe de lecture ou à faisceau concentré, destinée à l'utilisation dans des véhicules automobiles, propriétés immobilières ou sur des navires, en particulier dans des cabines de passagers et/ou des cockpits d'avions, la lampe de lecture ou à faisceau concentré comprenant :
une source lumineuse LED, dont la température de couleur est réglable entre les nuances «blanc chaud» à «blanc froid» ;
une optique primaire, réalisée par exemple sous forme de lentille convergente ; et
une optique secondaire pour focaliser la lumière émise par la source lumineuse sur une surface à éclairer (plan de lecture) ;
au moins quatre LEDs haute puissance (S, S1, S2) de température(s) de couleur égale(s) ou différente(s), déterminant la nuance de la lumière émise, sur ou le long de la courbe de Planck dans le diagramme CIE (1), et/ou de longueurs d'ondes égales ou
différentes pour obtenir un rendu de couleur élevé avec un indice de reproduction de couleur CRI compris entre 80 et 100, étant prévues en tant que source lumineuse LED;
les localisations chromatiques de source lumineuse des LEDs haute puissance utilisées formant à l'intérieur du diagramme CIE (1) les sommets (EI à E4) d'un quadrilatère chromatique (3) et/ou d'un polygone chromatique, qui inclut la courbe de Planck (2) ;
au moins une micro-optique (M) pour le mélange des spectres lumineux émis par les LEDs haute puissance (S, S1, S2) étant disposée à une distance prédéfinie (d1, d2),
en tant qu'optique secondaire, en aval de l'optique primaire (L1, L11), afin de générer des rayonnements ayant une température proche de la lumière blanche et de dévier la lumière mélangée sur la surface à éclairer (plan de lecture B) ;
quatre LEDs haute puissance (S1, S2) étant prévues, dont une LED haute puissance émet de la lumière blanche chaude - blanche, une autre LED haute puissance émet de la lumière blanche froide, une autre LED haute puissance émet de la lumière rouge, et une autre LED haute puissance émet de la lumière cyan, d'une température de couleur et/ou d'une longueur d'onde prédéfinies.

2. Lampe de lecture ou à faisceau concentré selon la revendication 1, la micro-optique (M) étant constituée d'au moins deux micro-optiques individuelles (M1 et/ou M2), l'une des micro-optiques individuelles (M1 ou M2) servant au mélange des spectres lumineux émis par les LEDs haute puissance (S1, S2), et l'autre micro-optique individuelle (M1 et/ou M2) déviant la lumière mélangée sur la surface à éclairer (plan de lecture B).

3. Lampe de lecture ou à faisceau concentré selon l'une des revendications 1 et 2, les micro-optiques (M, M1, M2) influant spécialement, pour la délimitation précise du champ lumineux, sur la forme du champ à éclairer et permettant ainsi des champs éclairés en particulier ovales ou rectangulaires.

4. Lampe de lecture ou à faisceau concentré selon l'une des revendications 1, 2 et 3, différentes micro-optiques (M, M1, M2) étant prévues pour obtenir des angles de rayonnement différents de la lumière mélangée, émergente des micro-optiques (M, M1, M2).
